Europäisches Patentamt

European Patent Office

Office européen des brevets

(11) Publication number: **0 005 381**
**A1**

(12) **EUROPEAN PATENT APPLICATION**

(21) Application number: **79300797.2**

(22) Date of filing: **09.05.79**

(51) Int. Cl.²: **B 29 C 7/00,** B 29 F 1/14,
B 22 D 29/00

(30) Priority: **09.05.78 GB 1849978**

(43) Date of publication of application: **14.11.79**
**Bulletin 79/23**

(84) Designated Contracting States: **BE DE FR GB IT NL SE**

(71) Applicant: **HIGHTONS PLASTICS LIMITED, Fircroft**
**Way, Edenbridge Kent (GB)**

(72) Inventor: **Higton, Peter Albert, Fircroft Way,**
**Edenbridge Kent (GB)**

(74) Representative: **Day, Jeremy John et al, REDDIE &**
**GROSE 16 Theobalds Road, London, WC1X 8PL (GB)**

(54) **Ejection device.**

(57) The invention relates to an ejection device for use
with a moulding tool comprising an ejector plate (12) ca-
pable of being mounted on a cavity plate (11)of the mould-
ing tool for movement towards and away from the cavity
plate (11) and carrying at least one ejection pin (20) which
when the ejector plate (12) is moved towards the cavity
plate (11) passes through an opening or plurality of open-
ings (32) in the cavity plate (11) to stand proud of the surface thereof, wherein cam means (18, 28) provided on the
underside of the ejector plate (12) remote from the cavity
plate (11) are operable to cause said movement of the
ejector plate (12) towards the cavity plate (11). Preferably
the cam means comprise one or more rolling bearing
means (18) that co-operate with one or more wedge
shaped driving surfaces (28).

- 1 -

EJECTION DEVICE

The present invention relates to moulding and in particular to ejection devices for use with moulding tools.

Ejection devices for use with moulding tools, especially in injection moulding apparatus normally comprised an injector plate mounted on a cavity plate of the moulding tool for movement towards and away from the cavity plate and carrying a number of ejection pins which when the ejector plate is moved towards the cavity plate passed through openings in the cavity plate to extend proud of the interior surface of the cavity plate so that the moulding within the cavity plate is pushed out by the pins in their passage through the openings. Movement of the ejector plate towards the cavity plate is normally effected by a force applied to a rod or rods extending perpendicularly to the ejector plate. This means that a considerable space is required below the cavity plate of the moulding tool to accommodate the ejection device and its associated operating means, which are normally hydraulic.

This invention provides an ejection device for use with a moulding tool comprising an ejector plate capable of being mounted on a cavity plate of the moulding tool for movement towards and away from the cavity plate and carrying at least one ejection pin which, when the ejector plate is moved towards the cavity plate, passes through an opening in the cavity plate to extend proud of the surface thereof, wherein cam means provided on the underside of the ejector plate remote from the cavity plate are operable to cause said movement of the ejector plate towards the cavity plate.

By the use of cam means for operating the ejection device of the invention it is possible to locate the operating means for the ejection device to one side of the moulding tool instead of in line with the moulding tool and thus the space required for accommodating the moulding tool with its associated ejector plates can be greatly reduced.

In a preferred form of the invention the cam means comprises one or more rolling bearing means that co-operate with one or more wedge shaped driving surfaces. The wedge shaped driving surfaces may be provided on the underside of the ejector plate with the rolling bearing means being provided on a movable member such that when moved from a rest position to an operative position they bear on the wedged shaped driving surfaces and force the ejector plate towards the cavity plate but preferably the rolling bearing means are carried on the ejector plate and the wedge shaped driving surfaces are provided on a movable member. The movable member is preferably a movable bar extending generally parallel to and spaced at a fixed distance from the ejector plate.

The invention will now be described by way of example only with reference to the accompanying drawings in which:-

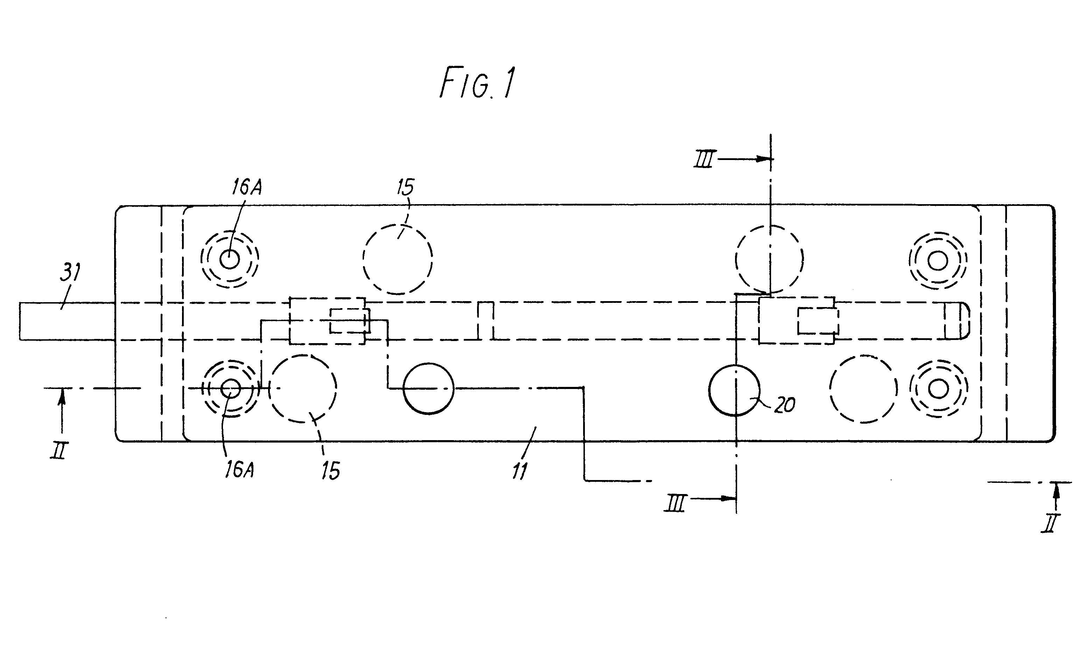

Fig. 1 is a bottom plan of part of a moulding tool having an ejection device embodying the invention;

Fig. 2 is a vertical section on the line II - II in Fig. 1; and

Fig. 3 is a vertical section on the line III - III in Fig. 1, showing the ejection device in its operative position.

A moulding tool, part only of which is shown in the drawings includes a cavity plate 11 on the under face of which is mounted an ejection device 12 which includes a movable ejector plate 13 which carries a number of ejector pins 20 of the device 12.

The ejection device 12 is accommodated within a housing 25 which comprises a bottom plate 26 secured to end walls 27 that act as spacer blocks separating the bottom plate 26 from the cavity plate 11.

The ejector plate 13 is slideably mounted by means of bushes 14 on four support pillars 15 which extend from the bottom plate 25 and are secured by screws 16 to the plate 11. The ejector plate 13 is normally held spaced from the cavity plate 11 by means of compression springs 17 that surround four shoulder screws 16A, which pass slideably through plate B, which springs act between the ejector plate 13 and the under face of the cavity plate 11.

On the side of the ejector plate 13 remote from the cavity plate 11 is mounted a pair of rollers 18 each accommodated in a respective housing 19 secured to the plate 13 by screws 21 and dowels 23 and having a spindle 24 about which the roller is rotatable.

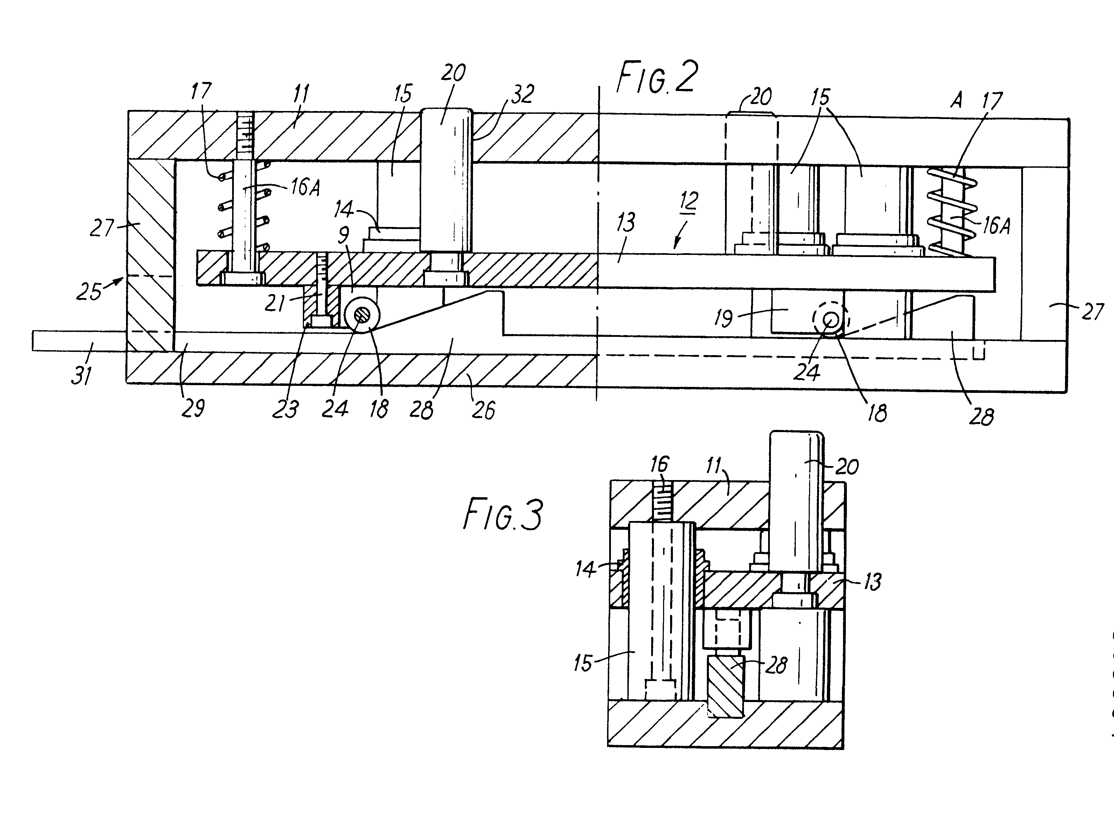

The rollers 18 each co-operate with a respective one of a pair of wedge surfaces 28 provided on a bar 29 that is slideably mounted in a groove 30 in the inner surface of the bottom plate 26 and extends longitudinally through the housing 25. Bar 29 has an end 31 disposed outside the housing 25, which end 31 is connected to an hydraulic cylinder (not shown). The bar 29 can be moved from its rest position (shown in Fig. 2) to an operative position in which the pins 20 stand proud of the uppersurface of the cavity plate 11 and eject the moulded article from the moulding tool.

In use, operation of the hydraulic cylinder pulls on the bar 29 causing the wedge surfaces 28 to push on the rollers 18, causing the ejector plate 13 to move towards the cavity plate 11 compressing the springs 17. The outer ends of the ejector pins 20 are normally accommodated in openings 32 in the cavity plate 11, but as the ejector

0005381

plate 13 moves towards the cavity plate 11, the pins 20 move through the openings 32 to extend proud of the interior surface of the cavity plate (as shown in Fig. 3). When the bar 29 is returned to its initial rest position by the hydraulic cylinder, the springs 17 return the ejector plate 13 to its initial position, retracting the pins 20 through the openings 32.

The ejection device above described can be fitted into a small space allowing several moulding cavities to be fitted into the same mould height on a moulding machine. In addition, the use of an hydraulic cylinder disposed outside the mould allows for easy maintenance and repair.

- 5 -                          0005381

CLAIMS

1.        An ejection device for use with a moulding tool comprising an ejector plate capable of being mounted on a cavity plate of the moulding tool for movement towards and away from the cavity plate and carrying at least one ejection pin which when the ejector plate is moved towards the cavity plate passes through an opening or plurality of openings in the cavity plate to stand proud of the surface thereof, wherein cam means provided on the underside of the ejector plate remote from the cavity plate are operable to cause said movement of the ejector plate towards the cavity plate.

2.        A device according to claim 1 wherein the cam means comprise one or more rolling bearing means that co-operate with one or more wedge shaped driving surfaces.

3.        A device according to claim 2 wherein the driving surfaces are carried by the ejector plate and the rolling bearing means are carried by a movable member so positioned relative to the driving surfaces that on movement of the member from a rest position to an operative position co-operation between the driving surfaces and the rolling bearing means force the ejector plate towards the cavity plate.

4.        A device according to claim 2 wherein the rolling bearing means are provided on the ejector plate and the driving surfaces are provided on a movable member so positioned relative to the driving surfaces that on movement of the member from a rest position to an operative position co-operation between the driving surfaces and the rolling bearing means force the ejector plate towards the cavity plate.

5.        A device according to claim 3 or claim 4 wherein the movable member is a movable bar extending generally parallel to and spaced, at a fixed distance from the ejector plate.

6.        A device according to any of claims 1 to 5 including a housing comprising a bottom plate and walls at opposite longitudinal ends of the bottom plate  which walls serve as spacer blocks separating the bottom plate from the cavity plate of the mould, and the ejector plate is slideably mounted on pillars extending vertically from said bottom plate.

7.        A device as claimed in claim 6 wherein the ends of said pillars remote from said bottom plate are so formed that they can be attached to the cavity plate  of the moulding tool.

8.        A device according to claim 6 or claim 7 wherein the movable member is slideably located in a groove in the bottom plate of the housing and extends beyond the housing.

9.        A device according to claim 8 wherein the end of the movable member outside the housing is provided with means for attachment to a hydraulic cylinder or the like.

10.        A moulding tool comprising a cavity plate and, mounted on the cavity plate, an ejection device according to any of claims 1 to 9.

0005381

11.       A moulding tool as claimed in claim 10 wherein the ejector
plate is resiliently biased  away from the cavity plates.

12.       A moulding tool according to claim 11 wherein the ejector
plate is resiliently biased away from the cavity plate  by means of
compression springs melted on shoulder screws which pass slideably through
the ejector plate  and are screwed into the cavity plate.

0005381

FIG.1

FIG.2

FIG.3

0005381

| DOCUMENTS CONSIDERED TO BE RELEVANT ||| CLASSIFICATION OF THE APPLICATION (Int. Cl.²) |
|---|---|---|---|
| Category | Citation of document with indication, where appropriate, of relevant passages | Relevant to claim | B 29 C 7/00<br>B 29 F 1/14<br>B 22 D 29/C0 |
| | US - A - 3 718 415 (DE FELICE)<br><br>* the whole document *<br><br>---- | 1,2,4,<br>5,10,<br>11 | |
| | FR - A - 1 515 188 (LA RADIOTECH-<br>NIQUE-COPRIM<br>R.T.C.)<br><br>* page 3, right-hand column,<br>line 19 to page 4, left-<br>hand column, line 43; figures<br>3,4 *<br><br>---- | 1,6,<br>10,11,<br>12 | TECHNICAL FIELDS SEARCHED (Int.Cl.²)<br><br>B 29 C<br>B 29 F<br>B 22 D |
| | INDUSTRIES DES PLASTIQUES, volume<br>4, April 1948,<br>PARIS (FR)<br>M. BIORET: "Cours sur le moulage<br>des thermodurcissables-IV. L'é-<br>jection des pièces moulées",<br>pages 162-167<br><br>* page 165, figures 79 and 82 *<br><br>---- | 1,10,<br>11 | |
| A | US - A - 2 605 522 (McNAMARA)<br><br>* the whole document *<br><br>---- | 1,2,<br>10 | |
| A | US - A - 2 757 414 (CHALOUPKA)<br><br>* the whole document *<br><br>------- | 1,2,<br>10 | CATEGORY OF CITED DOCUMENTS<br><br>X: particularly relevant<br>A: technological background<br>O: non-written disclosure<br>P: intermediate document<br>T: theory or principle underlying<br>   the invention<br>E: conflicting application<br>D: document cited in the<br>   application<br>L: citation for other reasons |
| | The present search report has been drawn up for all claims || &: member of the same patent family, corresponding document |
| Place of search<br>The Hague | Date of completion of the search<br>9-08-1979 | Examiner<br>BOLLEN ||

EPO Form 1503.1 06.78